(19) Europäisches Patentamt
European Patent Office
Office européen des brevets

(11) **EP 4 715 367 A1**

(12) **EUROPEAN PATENT APPLICATION**
published in accordance with Art. 153(4) EPC

(43) Date of publication:
**25.03.2026 Bulletin 2026/13**

(21) Application number: **24825550.7**

(22) Date of filing: **08.04.2024**

(51) International Patent Classification (IPC):
**G01N 21/17** (2006.01)     **G01N 21/45** (2006.01)

(52) Cooperative Patent Classification (CPC):
**G01N 21/17; G01N 21/45**

(86) International application number:
**PCT/JP2024/014316**

(87) International publication number:
**WO 2024/262140 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 JP 2023101802**

(71) Applicant: **Hamamatsu Photonics K.K.
Hamamatsu-shi, Shizuoka 435-8558 (JP)**

(72) Inventors:
• **YASUHIKO, Osamu
Hamamatsu-shi, Shizuoka 435-8558 (JP)**
• **TAKEUCHI, Kozo
Hamamatsu-shi, Shizuoka 435-8558 (JP)**
• **YAMADA, Hidenao
Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **OBSERVATION DEVICE AND OBSERVATION METHOD**

(57)     An observation apparatus 1A is an apparatus for observing a moving observation object S, and includes a light source 11, a beam splitter 12, mirrors 13 and 14, a beam splitter 15, a modulation unit 21, lenses 31 to 34, an imaging unit 41, and a processing unit 42. The modulation unit 21 inputs first split light L1 arriving from the mirror 13, spatially amplitude modulates the input first split light L1 based on a modulation pattern, and causes the first split light to include a plurality of light components having wavenumber components in a moving direction of the observation object S different from each other. The processing unit 42 generates a complex amplitude image when the observation object S is irradiated with each of the plurality of light components based on a detection signal repeatedly output from the imaging unit 41. Thus, an apparatus capable of easily observing a moving observation object is realized.

**Fig.1**

## Description

### Technical Field

The present disclosure relates to an apparatus and a method for observing a moving observation object.

### Background Art

Patent Document 1 discloses an invention of an apparatus and a method for observing a moving observation object. The observation apparatus described in this document splits light output from a light source into first split light and second split light, combines the first split light which is Doppler shifted by being passed through the moving observation object and the second split light obtained by shifting an optical frequency by a heterodyne frequency, and performs heterodyne interference between the first split light and the second split light.

Further, the observation apparatus can acquire time series data of a complex amplitude image of the first split light on an imaging plane based on time series data of an intensity image (two-dimensional interference image) of interference light arriving at the imaging plane of a camera. The above observation apparatus can perform non-staining and non-invasive imaging of the moving observation object, and may be used for, for example, observing a moving cell in a flow cytometer.

### Citation List

### Patent Literature

Patent Document 1: International Publication No. 2013/065796

### Non Patent Literature

Non Patent Document 1: W. Choi, C. Fang-Yen, K. Badizadegan, S. Oh, N. Lue, R. R. Dasari, and M. S. Feld, "Tomographic phase microscopy", Nature Methods, Vol.4, No.9, pp.717-719, 2007
Non Patent Document 2: Y. Sung, W. Choi, C. Fang-Yen, K. Badizadegan, R. R. Dasari, and M. S. Feld, "Optical diffraction tomography for high resolution live cell imaging", Optics Express, Vol.17, No.1, pp.266-277, 2009

### Summary of Invention

### Technical Problem

In the invention disclosed in Patent Document 1, the imaging plane is different from an object plane, and thus, adjustment of the optical system is not easy, and there is a difficulty in focus adjustment, and therefore, observation of the observation object is also not easy.

An object of an embodiment is to provide an apparatus and a method capable of easily observing a moving observation object.

### Solution to Problem

An embodiment is an observation apparatus. The observation apparatus is an apparatus for observing a moving observation object, and includes (1) a light source for outputting light; (2) a splitting unit for splitting the light into first split light and second split light; (3) a modulation unit for spatially amplitude modulating the first split light based on a modulation pattern, and causing the first split light to include a plurality of light components having wavenumber components in a moving direction of the observation object different from each other; (4) an irradiation unit for irradiating the observation object at a position optically conjugate to the modulation unit with the first split light after being amplitude modulated by the modulation unit; (5) a combining unit for combining the first split light passed through the observation object and the second split light, and outputting combined light; (6) an imaging unit having an imaging plane arranged at a position optically conjugate to the observation object, and for receiving the combined light on the imaging plane, and repeatedly outputting a detection signal representing a two-dimensional interference image; and (7) a processing unit for generating a complex amplitude image when the observation object is irradiated with each of the plurality of light components based on the detection signal repeatedly output from the imaging unit, and (8) the processing unit, based on time series data of the two-dimensional interference image generated from the detection signal repeatedly output from the imaging unit, generates an image of the observation object at each time by the first split light arriving at the imaging plane, generates an image of the observation object at each time in a coordinate system fixed to the observation object, extracts a component which varies with time at a frequency according to the wavenumber component in the moving direction of each of the plurality of light components, and generates the complex amplitude image when the observation object is irradiated with each of the plurality of light components.

An embodiment is an observation method. The observation method is a method for observing a moving observation object, and includes (1) a splitting step of splitting light output from a light source into first split light and second split light; (2) a modulation step of using a modulation unit for spatially amplitude modulating the first split light based on a modulation pattern, and causing the first split light to include a plurality of light components having wavenumber components in a moving direction of the observation object different from each other; (3) an irradiation step of irradiating the observation object at a position optically conjugate to the modulation unit with the first split light after being amplitude modulated by the modulation unit; (4) a combining step of combining the first split light passed through the observation object and the second split light, and outputting combined light; (5) an imaging step of using an imaging unit having an imaging plane arranged at a position optically conjugate to the observation object, receiving the combined light on the imaging plane, and repeatedly outputting a detection signal representing a two-dimensional interference image; and (6) a processing step of generating a complex amplitude image when the observation object is irradiated with each of the plurality of light components based on the detection signal repeatedly output from the imaging unit, and (7) in the processing step, based on time series data of the two-dimensional interference image generated from the detection signal repeatedly output from the imaging unit, an image of the observation object at each time by the first split light arriving at the imaging plane is generated, an image of the observation object at each time in a coordinate system fixed to the observation object is generated, a component which varies with time at a frequency according to the wavenumber component in the moving direction of each of the plurality of light components is extracted, and the complex amplitude image when the observation object is irradiated with each of the plurality of light components is generated.

**Advantageous Effects of Invention**

According to the observation apparatus and the observation method of the embodiments, a moving observation object can be easily observed.

**Brief Description of Drawings**

[FIG. 1] FIG. 1 is a diagram illustrating a configuration of an observation apparatus 1A.
[FIG. 2] FIG. 2 is a diagram illustrating a configuration of an observation apparatus 1B.
[FIG. 3] FIG. 3 is a diagram illustrating a configuration of an observation apparatus 1C.
[FIG. 4] FIG. 4 is a diagram showing an example of a distribution of a wavenumber vector $\{(k_{x,n}, k_{y,n})\}_n$ in a wavenumber space.
[FIG. 5] FIG. 5 includes (a), (b) diagrams showing a modulation pattern $m(x, y)$ obtained from $M(k_x, k_y)$ created according to Formula (4) based on the distribution of the wavenumber vector $\{(k_{x,n}, k_{y,n})\}_n$ in the wavenumber space shown in FIG. 4.
[FIG. 6] FIG. 6 includes (a), (b) diagrams showing the modulation pattern $m(x, y)$ obtained from $M(k_x, k_y)$ created according to Formula (5) based on the distribution of the wavenumber vector $\{(k_{x,n}, k_{y,n})\}_n$ in the wavenumber space shown in FIG. 4.
[FIG. 7] FIG. 7 includes (a) - (c) diagrams showing other examples of the distribution of the wavenumber vector $\{(k_{x,n}, k_{y,n})\}_n$ in the wavenumber space.
[FIG. 8] FIG. 8 includes (a), (b) diagrams showing other examples of the distribution of the wavenumber vector $\{(k_{x,n}, k_{y,n})\}_n$ in the wavenumber space.
[FIG. 9] FIG. 9 is a diagram showing the distribution of the wavenumber vector $\{(k_{x,n}, k_{y,n})\}_n$ used in a simulation.
[FIG. 10] FIG. 10 is a diagram showing the modulation pattern $m(x, y)$ created based on the distribution of the wavenumber vector $\{(k_{x,n}, k_{y,n})\}_n$ shown in FIG. 9.
[FIG. 11] FIG. 11 includes (a) - (c) diagrams each showing a real part of an image of $u_{out}(x, y, t)$ at each time generated in the simulation.
[FIG. 12] FIG. 12 includes (a) - (c) diagrams each showing the real part of the image of $u'_{out}(x', y, t)$ after coordinate conversion at each time generated in the simulation.
[FIG. 13] FIG. 13 includes (a) - (c) diagrams each showing a complex amplitude image of each irradiation direction generated in the simulation.

[FIG. 14] FIG. 14 is a diagram showing phase differential images of an observation object generated in the simulation.

[FIG. 15] FIG. 15 is a diagram showing refractive index distribution images of the observation object generated in the simulation.

[FIG. 16] FIG. 16 is a diagram showing the distribution of the wavenumber vector $\{(k_{x,n}, k_{y,n})\}_n$ used in the simulation.

[FIG. 17] FIG. 17 is a diagram showing the modulation pattern $m(x, y)$ created based on the distribution of the wavenumber vector $\{(k_{x,n}, k_{y,n})\}_n$ shown in FIG. 16.

[FIG. 18] FIG. 18 is a diagram showing a correspondence relationship between a wavenumber component $k_{x,n}$ in an x direction and a frequency $f_n$ of each light component.

[FIG. 19] FIG. 19 is a diagram showing the frequencies $f_n$ after aliasing arranged in order from smaller to larger values.

[FIG. 20] FIG. 20 includes (a) - (c) diagrams each showing the real part of the image of $u_{out}(x, y, t)$ at each time generated in the simulation.

[FIG. 21] FIG. 21 includes (a) - (c) diagrams each showing the real part of the image of $u'_{out}(x', y, t)$ after coordinate conversion at each time generated in the simulation.

[FIG. 22] FIG. 22 includes (a) - (c) diagrams each showing the complex amplitude image of each irradiation direction generated in the simulation.

[FIG. 23] FIG. 23 is a diagram showing the phase differential images of the observation object generated in the simulation.

[FIG. 24] FIG. 24 is a diagram showing the refractive index distribution images of the observation object generated in the simulation.

## Description of Embodiments

Hereinafter, embodiments of an observation apparatus and an observation method will be described in detail with reference to the accompanying drawings. In the description of the drawings, the same elements will be denoted by the same reference signs, and redundant description will be omitted. The present invention is not limited to these examples, and the Claims, their equivalents, and all the changes within the scope are intended as would fall within the scope of the present invention.

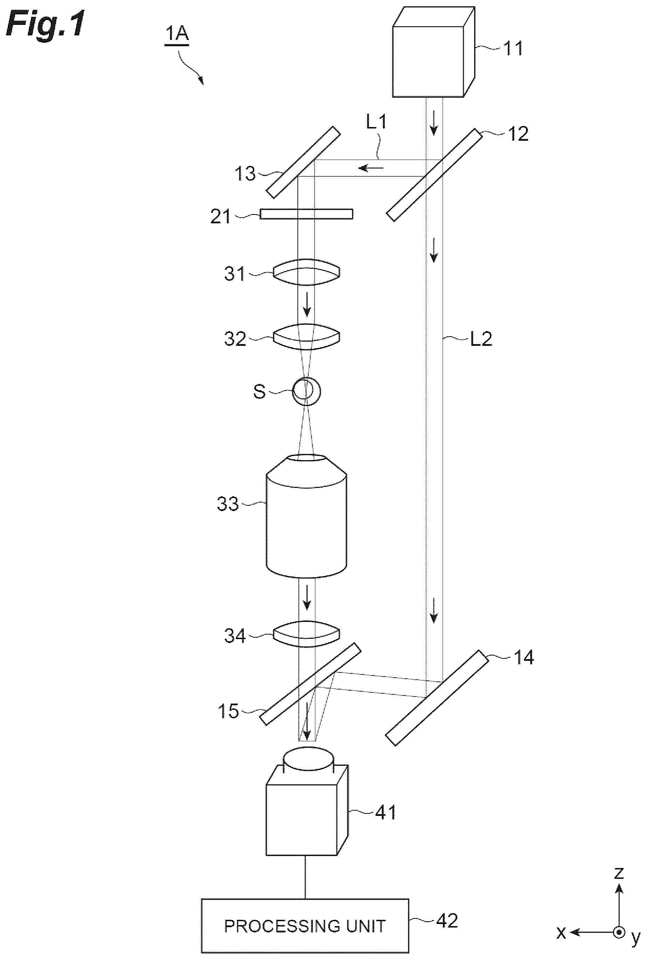

FIG. 1 is a diagram illustrating a configuration of an observation apparatus 1A. The observation apparatus 1A is an apparatus for observing a moving observation object S, and includes a light source 11, a beam splitter 12, mirrors 13 and 14, a beam splitter 15, a modulation unit 21, lenses 31 to 34, an imaging unit 41, and a processing unit 42. Further, an observation method performed by using the observation apparatus 1A includes a splitting step, a modulation step, an irradiation step, a combining step, an imaging step, and a processing step.

In this diagram, an xyz orthogonal coordinate system is illustrated for convenience of explanation. The x axis is a direction parallel to a moving direction of an observation object S. The z axis is parallel to an optical axis of the lenses 32 and 33.

The moving observation object S is, for example, a cell or a cell mass flowing in a flow cell, or a biological sample placed on a glass slide moving by a transport unit. Further, the observation object S only needs to move relative to the observation apparatus 1A, and a configuration in which the observation apparatus 1A (for example, an optical system) moves relative to the stationary observation object S may be used.

The light source 11 outputs light. The light source 11 is preferably a laser light source for outputting laser light having a single optical frequency, and for example, the light source may be a He-Ne laser light source or a semiconductor laser light source. The light source 11 may include a beam expander for enlarging a beam diameter of the light.

The light source 11 may be an incoherent light source such as a superluminescent diode (SLD) light source, a super continuum (SC) light source, or the like. As the light source 11, it is preferable to use a light source having a long temporal coherence length, and further, a spatially incoherent light source such as an LED or a halogen lamp may be used in combination with a pinhole or the like for improving spatial coherence.

The beam splitter 12 is a splitting unit which is optically coupled to the light source 11. The beam splitter 12 inputs the light output from the light source 11, and splits the input light into two light beams of first split light L1 and second split light L2 (the splitting step). The beam splitter 12 outputs the first split light L1 to the mirror 13, and outputs the second split light L2 to the mirror 14. The beam splitter 12 may be a half mirror.

The mirror 13 is optically coupled to the beam splitter 12. The mirror 13 inputs the first split light L1 output from the beam splitter 12, reflects the input first split light L1, and outputs the light to the modulation unit 21.

The mirror 14 is optically coupled to the beam splitter 12. The mirror 14 inputs the second split light L2 output from the beam splitter 12, reflects the input second split light L2, and outputs the light to the beam splitter 15.

The beam splitter 15 inputs the first split light L1 reflected by the mirror 13 and arriving via the modulation unit 21, the observation object S, and the like, and in addition, inputs the second split light L2 arriving after being reflected by the mirror 14. The beam splitter 15 is a combining unit, and combines the input first split light L1 and the input second split light L2, and outputs combined light to the imaging unit 41 (the combining step).

Propagation directions of the first split light L1 and the second split light L2 from the beam splitter 15 to the imaging unit 41 are not parallel to each other, and form a certain angle. The beam splitter 15 may be a half mirror.

An optical system from the beam splitter 12 via the mirrors 13 and 14 to the beam splitter 15 constitutes a Mach-Zehnder interferometer. On an optical path of the first split light L1 from the mirror 13 to the beam splitter 15, the modulation unit 21, the lens 31, the lens 32, the lens 33, and the lens 34 are arranged in this order. Each of the lenses 31 to 34 may be a spherical lens. The observation object S moves in the x axis direction between the lens 32 and the lens 33. The observation object S is, for example, a cell moving in a flow cytometer along a flow path in the x axis direction.

The modulation unit 21 is optically coupled to the mirror 13. The modulation unit 21 inputs the first split light L1 arriving from the mirror 13, spatially amplitude modulates the input first split light L1 based on a modulation pattern, and outputs the first split light L1 after the modulation to the lens 31 (the modulation step).

The lenses 31 and 32 are an irradiation unit optically coupled to the modulation unit 21. The lenses 31 and 32 input the first split light L1 arriving after being amplitude modulated and output by the modulation unit 21, and irradiate the observation object S at a position optically conjugate to the modulation unit 21 with the first split light L1 (the irradiation step). The optical axis of the lens 32 is parallel to the z axis.

The lenses 33 and 34 cause the first split light L1 passed through the observation object S to be incident on an imaging plane of the imaging unit 41, and can form an image of the observation object S on the imaging plane of the imaging unit 41. The lens 33 is an objective lens, and the optical axis of the lens 33 is parallel to the z axis.

The imaging unit 41 is optically coupled to the beam splitter 15. The imaging unit 41 is an area sensor such as a CCD sensor, a CMOS sensor, or the like. The imaging plane of the imaging unit 41 is arranged at a position optically conjugate to the observation object S. The imaging unit 41 receives the combined light output from the beam splitter 15 on the imaging plane, and repeatedly outputs a detection signal representing a two-dimensional interference image generated by interference between the first split light L1 and the second split light L2 (the imaging step).

The processing unit 42 is electrically connected to the imaging unit 41. The processing unit 42 inputs the detection signal repeatedly output from the imaging unit 41, and performs processing of time series data of the two-dimensional interference image generated from the detection signal (the processing step). By the above processing, the processing unit 42 generates a complex amplitude image of the observation object S. In addition, the processing unit 42 can also generate a phase differential image of the observation object S, and further, can also generate a refractive index distribution image of the observation object S.

The processing unit 42 is configured by using, for example, an operation device (a computer or the like ) including built-in components of a central processing unit (CPU) or a graphics processing unit (GPU) which is a processor, a random access memory (RAM) or a read only memory (ROM) which is a storage medium, a communication module, an input and output module, and the like. Further, for example, the processing unit 42 may be configured by using a field programmable gate array (FPGA) or an application specific integrated circuit (ASIC).

The modulation unit 21 illustrated in FIG. 1 is a spatial light modulator of a transmission type for spatially amplitude modulating the first split light L1 based on the modulation pattern and transmitting the light. The modulation pattern in the modulation unit 21 may be a fixed pattern, or may be a pattern which can be variably set. The modulation unit 21 in which the modulation pattern is set to the fixed pattern may be, for example, a grayscale photomask, or may be a photosensitive film (a negative film). The modulation unit 21 may be a unit having the modulation pattern according to a density distribution of small light blocking regions.

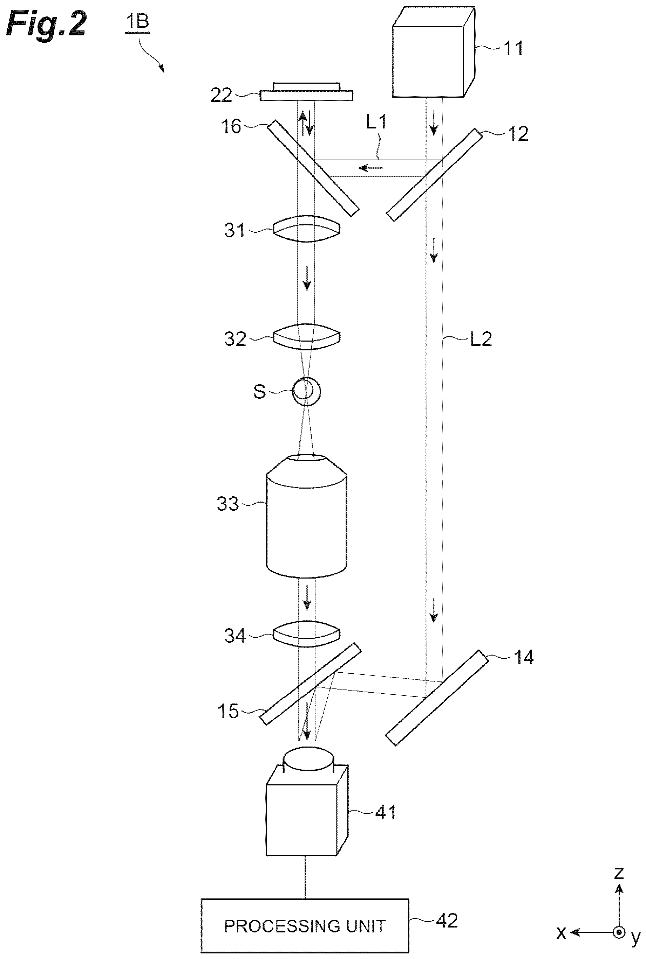

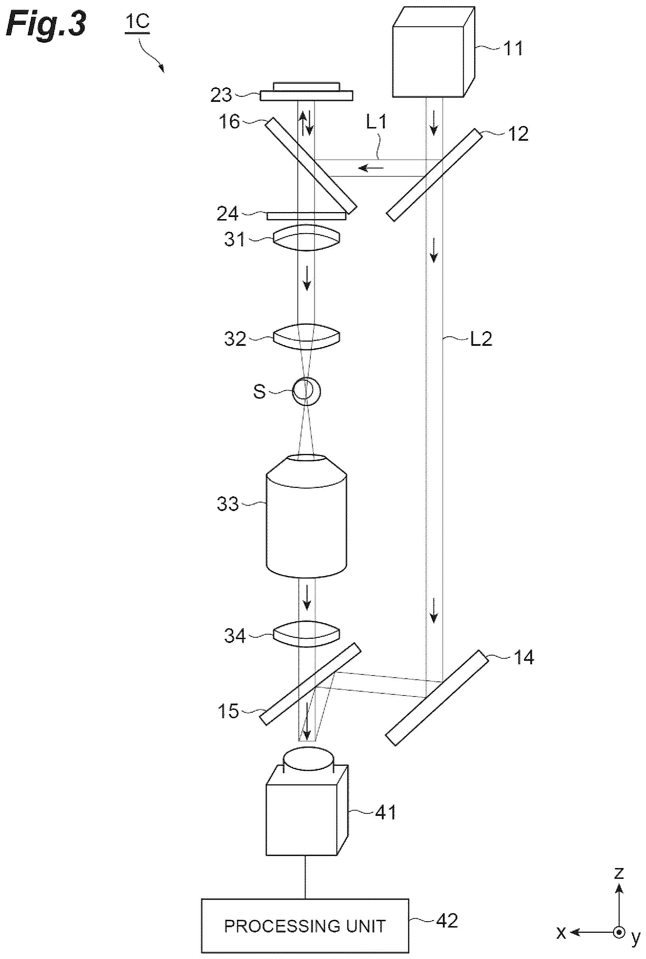

The modulation unit for spatially amplitude modulating the first split light may be implemented by using various configurations. The modulation unit may have a configuration including a spatial light modulator of a transmission type, or may have a configuration including a spatial light modulator of a reflection type. The modulation pattern in the modulation unit may be set to the fixed pattern, or may be set to the pattern which can be variably set. Further, the modulation unit may also have a configuration including a spatial light modulator of a phase modulation type and a polarizer. Each of FIG. 2 and FIG. 3 is a diagram illustrating a configuration of an observation apparatus including a modulation unit of the other configuration example.

FIG. 2 is a diagram illustrating a configuration of an observation apparatus 1B. As compared with the configuration of the observation apparatus 1A (FIG. 1), the observation apparatus 1B (FIG. 2) is different in that the apparatus includes a beam splitter 16 and a modulation unit 22 instead of the mirror 13 and the modulation unit 21.

The beam splitter 16 reflects the first split light L1 arriving from the beam splitter 12 to the modulation unit 22, and transmits the first split light L1 arriving from the modulation unit 22 to the lens 31. The modulation unit 22 is a spatial light modulator of a reflection type capable of spatially amplitude modulating the light.

The modulation unit 22 inputs the first split light L1 arriving from the beam splitter 16, spatially amplitude modulates the first split light L1 based on the modulation pattern, and reflects the light to the beam splitter 16. The modulation unit 22 may be a digital mirror device (DMD), and in this case, the unit can have the modulation pattern according to a density distribution of pixels for reflecting the light to the beam splitter 16.

FIG. 3 is a diagram illustrating a configuration of an observation apparatus 1C. As compared with the configuration of the observation apparatus 1B (FIG. 2), the observation apparatus 1C (FIG. 3) is different in that the apparatus includes a modulation unit including a spatial light modulator 23 of a phase modulation type and a polarizer 24 instead of the modulation unit 22 (a spatial light modulator of an amplitude modulation type).

The beam splitter 16 reflects the first split light L1 arriving from the beam splitter 12 to the spatial light modulator 23, and transmits the first split light L1 arriving from the spatial light modulator 23 to the polarizer 24. The spatial light modulator 23 is a spatial light modulator of a reflection type capable of spatially phase modulating the light.

The spatial light modulator 23 inputs the first split light L1 arriving from the beam splitter 16, spatially phase modulates the first split light L1 based on the modulation pattern, and reflects the light to the beam splitter 16. The polarizer 24 inputs the first split light L1 reflected by the spatial light modulator 23 and arriving via the beam splitter 16, and selectively transmits a linearly polarized light component of a certain orientation out of the first split light L1 to the lens 31.

The spatial light modulator 23 is, for example, a liquid crystal on silicon spatial light modulator (LCOS-SLM), which is a reflection type electric address spatial light phase modulator. The LCOS-SLM applies a CMOS technique to an address unit to directly voltage-control liquid crystal, and thus, phase modulation with high accuracy and high-speed response can be performed.

The spatial light modulator 23 has a modulation plane in which a plurality of pixel regions are arranged for outputting the light after performing different modulation according to a polarization orientation of each input light component. Linearly polarized light of a specific orientation (for example, an orientation of 45 degrees with respect to an orientation direction of liquid crystal in the spatial light modulator 23) is input to the spatial light modulator 23. The polarizer 24 outputs linearly polarized light of an orientation different from the specific orientation (for example, an orientation of 135 degrees with respect to the orientation direction of liquid crystal in the spatial light modulator 23) out of the light output from the spatial light modulator 23.

By using the above configuration, even when the spatial light modulator 23 is of the phase modulation type, the spatial light modulator 23 and the polarizer 24 can constitute the modulation unit for spatially amplitude modulating the first split light L1. The observation object S is at a position optically conjugate to the modulation plane of the spatial light modulator 23.

Next, the amplitude modulation of the first split light by the modulation unit (the modulation unit 21 in the configuration of FIG. 1, the modulation unit 22 in the configuration of FIG. 2, and the modulation unit including the spatial light modulator 23 and the polarizer 24 in the configuration of FIG. 3) in the modulation step will be described.

The modulation unit spatially amplitude modulates the first split light based on the modulation pattern. By the above amplitude modulation, the modulation unit causes the first split light to include a plurality of (N) light components having wavenumber components $k_{x,n}$ in the moving direction (the x direction) of the observation object S which are different from each other. Each light component is a plane wave. The first split light $u_{in}(x, y)$ output from the modulation unit is represented as a coherent sum of the N light components as shown in the following Formula (1). A wavenumber vector of an n-th light component out of the N light components is set to $(k_{x,n}, k_{y,n})$, and an amplitude of the n-th light component is set to $U_{in}(k_{x,n}, k_{y,n})$.

[Formula 1]

$$u_{in}(x, y) = \sum_{n=1}^{N} U_{in}(k_{x,n}, k_{y,n}) \cdot \exp\left[ i \left( k_{x,n} x + k_{y,n} y \right) \right] \qquad (1)$$

The modulation pattern of the modulation unit for generating the first split light represented by the above Formula (1) needs to satisfy the following conditions. The magnitude of the amplitude modulation is a real number of 0 or more and 1 or less, and thus, when the modulation pattern representing a distribution of the magnitude of the amplitude modulation is set to m(x, y), m(x, y) satisfies the relationship of the following Formula (2), and $M(k_x, k_y)$, which is a Fourier transform of m(x, y), satisfies the relationship of the following Formula (3).

[Formula 2]

$$0 \leq m(x, y) \leq 1 \qquad (2)$$

[Formula 3]

$$M(k_x, k_x) = M^*(-k_x, -k_x) \qquad (3)$$

$M(k_x, k_y)$ represents a distribution of the wavenumber vector in the wavenumber space of the light output after being amplitude modulated by the modulation unit, and thus, it has a discrete distribution. As a condition necessary for the processing by the processing unit 42, in the discrete distribution of $M(k_x, k_y)$, the wavenumber components $k_{x,n}$ in the moving direction (the x direction) of the observation object S need to have values different from each other. When the imaging unit 41 captures K images at a frame rate $f_s$, a frequency resolution when Fourier transform is performed with respect to a time axis is given by $f_s/K$, and therefore, it is sufficient that the wavenumber components $k_{x,n}$ are separated by at least the above magnitude. $m(x, y)$ is designed to satisfy the conditions described above.

As a specific example of the design, the modulation pattern $m(x, y)$ can be designed by performing the following processes of steps 1 to 3. In the step 1, in order to make the wavenumber components $k_{x,n}$ in the moving direction (the x direction) of the observation object S different from each other, $\{k_{x,n}\}_n$ are determined so as not to overlap in the range of $k_x > 0$ in the wavenumber space, $k_{y,n}$ is arbitrarily assigned to each $k_{x,n}$, and the wavenumber vectors $\{(k_{x,n}, k_{y,n})\}_n$ are determined.

Subsequently, in the step 2, in order to satisfy the condition of the above Formula (3), in the range of $k_x < 0$ in the wavenumber space, the wavenumber vectors $\{(k_{x,n}, k_{y,n})\}_n$ are determined so as to be point symmetric with respect to the range of $k_x > 0$ with an origin as a center. Further, the amplitude and the phase of $M(k_{x,n}, k_{y,n})$ are determined so as to satisfy the following Formula (4) or Formula (5). $\phi_n$ in Formula (5) is an arbitrary real number. In the range in the wavenumber space which does not correspond to the wavenumber vectors $\{(k_{x,n}, k_{y,n})\}_n$, it is set to $M(k_x, k_y) = 0$.

[Formula 4]

$$\left| M\left(k_{x,n}, k_{y,n}\right) \right| = 1$$
$$\angle M\left(k_{x,n}, k_{y,n}\right) = 0 \tag{4}$$

[Formula 5]

$$\left| M\left(k_{x,n}, k_{y,n}\right) \right| = 1$$
$$\angle M\left(k_{x,n}, k_{y,n}\right) = -\angle M\left(-k_{x,n}, -k_{y,n}\right) = \phi_n \tag{5}$$

Further subsequently, in the step 3, $m(x, y)$ is obtained by performing Fourier transform of $M(k_x, k_y)$, and then, in order to satisfy the condition of the above Formula (2), the modulation pattern $m(x, y)$ of the modulation unit for generating the first split light represented by the above Formula (1) is obtained by scaling $m(x, y)$ according to the following Formula (6).

[Formula 6]

$$m(x, y) \leftarrow \frac{m(x, y) - \min\left(m(x, y)\right)}{\max\left(m(x, y)\right) - \min\left(m(x, y)\right)} \tag{6}$$

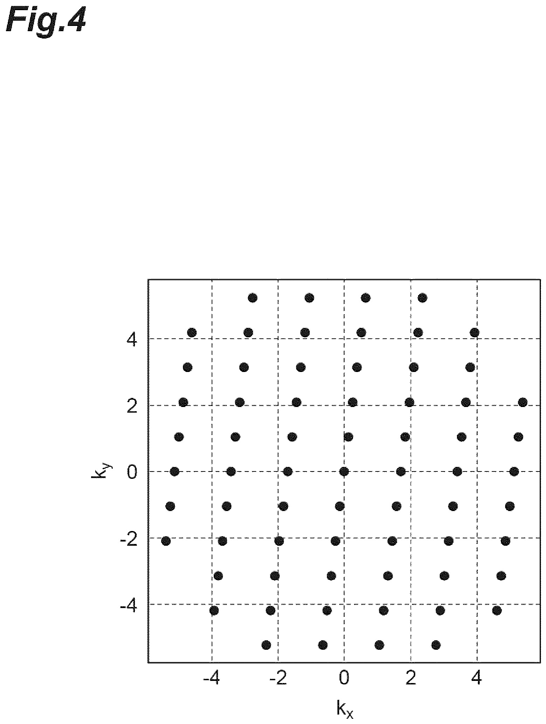

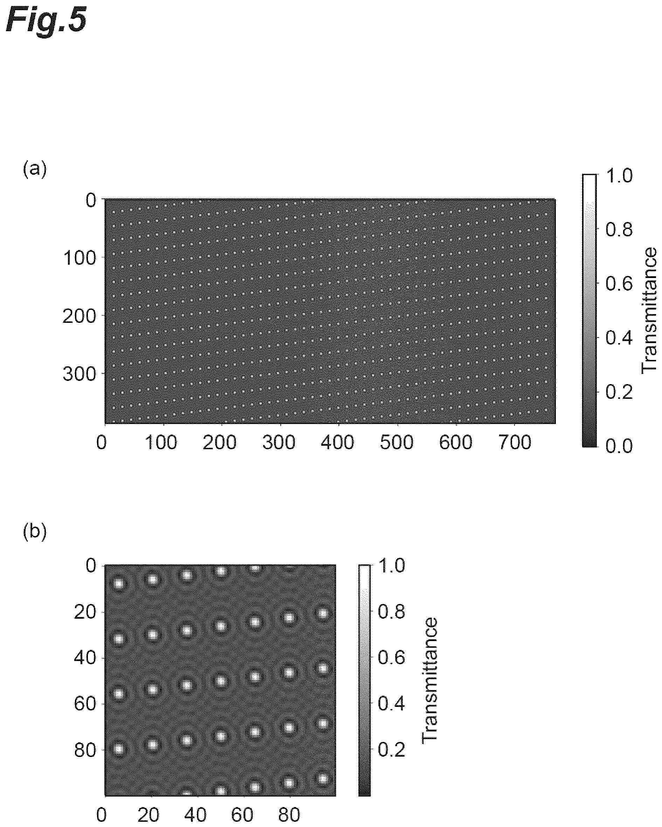

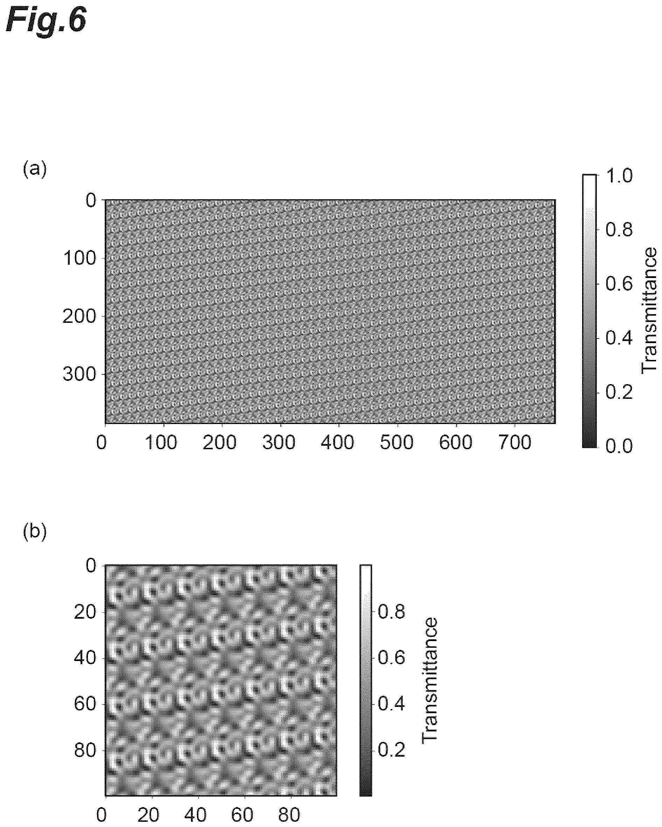

FIG. 4 is a diagram showing an example of the distribution of the wavenumber vectors $\{(k_{x,n}, k_{y,n})\}_n$ in the wavenumber space. In this diagram, positions corresponding to the wavenumber vectors $\{(k_{x,n}, k_{y,n})\}_n$ are indicated by black circles. FIG. 5 includes diagrams showing the modulation pattern $m(x, y)$ obtained from $M(k_x, k_y)$ generated according to Formula (4) based on the distribution of the wavenumber vectors $\{(k_{x,n}, k_{y,n})\}_n$ in the wavenumber space shown in FIG. 4. FIG. 6 includes diagrams showing the modulation pattern $m(x, y)$ obtained from $M(k_x, k_y)$ generated according to Formula (5) based on the distribution of the wavenumber vectors $\{(k_{x,n}, k_{y,n})\}_n$ in the wavenumber space shown in FIG. 4.

In each of FIG. 5 and FIG. 6, the magnitude of the amplitude modulation is indicated by grayscale, and a part of (a) is enlarged and shown in (b). In order to effectively utilize a dynamic range in the imaging by the imaging unit 41, it is preferable that the light intensity distribution is as flat as possible, and from this viewpoint, the modulation pattern $m(x, y)$ shown in FIG. 6 is preferable.

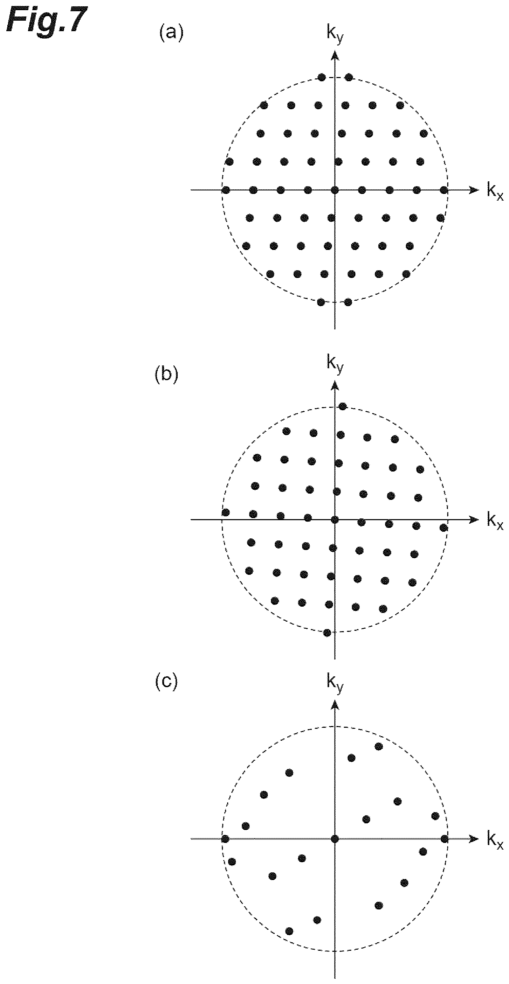

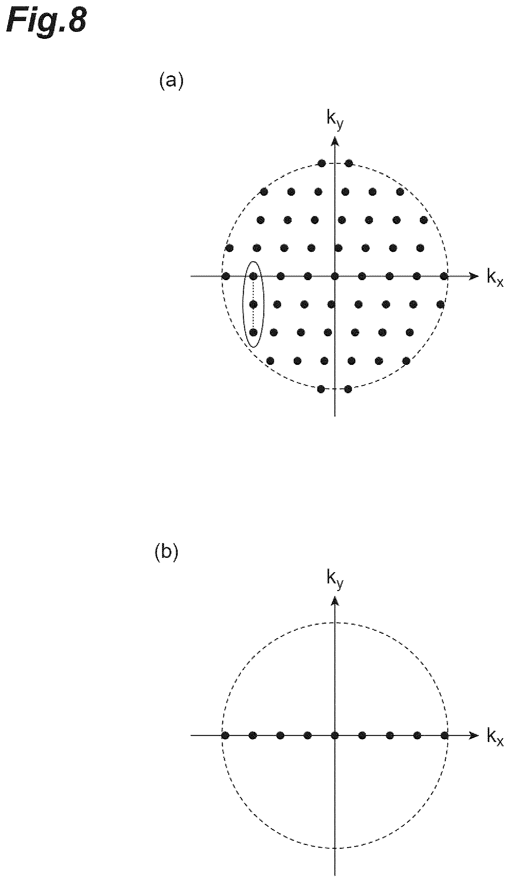

FIG. 7 and FIG. 8 include diagrams showing other examples of the distribution of the wavenumber vectors $\{(k_{x,n}, k_{y,n})\}_n$ in the wavenumber space. In these diagrams also, positions corresponding to the wavenumber vectors $\{(k_{x,n}, k_{y,n})\}_n$ are indicated by black circles.

An example shown in (a) in FIG. 7 is a configuration in which, after a square lattice in the wavenumber space is shear transformed in the $k_x$ direction, the wavenumber vectors $\{(k_{x,n}, k_{y,n})\}_n$ are set at respective lattice points (similar to the example shown in FIG. 4). An example shown in (b) in FIG. 7 is a configuration in which the wavenumber vectors $\{(k_{x,n}, k_{y,n})\}_n$ are set at respective lattice points of a square lattice rotated by a certain angle with respect to an origin of the wavenumber space as a center. An example shown in (c) in FIG. 7 is a configuration in which the wavenumber vectors $\{(k_{x,n}, k_{y,n})\}_n$ are set at respective aperiodic discrete positions in the wavenumber space. In the above examples, there are no wavenumber vectors $\{(k_{x,n}, k_{y,n})\}_n$ that have the same $k_{x,n}$.

An example shown in (a) in FIG. 8 is a modification of the example shown in (a) in FIG. 7, in which $k_{x,n}$ of some wavenumber vectors out of the wavenumber vectors $\{(k_{x,n}, k_{y,n})\}_n$ (three wavenumber vectors enclosed by an ellipse in the diagram) are made equal. In the processing performed by the processing unit 42, the wavenumber vectors having equal $k_{x,n}$ cannot be separated from each other, whereas the other wavenumber vectors can be separated from each other, and therefore, the distribution of the wavenumber vectors $\{(k_{x,n}, k_{y,n})\}_n$ as shown in (a) in FIG. 8 may be used.

An example shown in (b) in FIG. 8 is a configuration in which the wavenumber vectors $\{(k_{x,n}, k_{y,n})\}_n$ are set at discrete positions on a certain straight line in the wavenumber space. In the example shown in this diagram, it is set to $k_{y,n} = 0$. In this example, there are no wavenumber vectors $\{(k_{x,n}, k_{y,n})\}_n$ that have the same $k_{x,n}$. In addition, in the case in which the wavenumber vectors $\{(k_{x,n}, k_{y,n})\}_n$ are distributed one-dimensionally ((b) in FIG. 8) as described above, the number N of the wavenumber vectors $\{(k_{x,n}, k_{y,n})\}_n$ which can be set is smaller than in the case in which the wavenumber vectors $\{(k_{x,n}, k_{y,n})\}_n$ are distributed two-dimensionally ((a) to (c) in FIG. 7, (a) in FIG. 8).

In order to increase accuracy of three-dimensional image reconstruction of the observation object S, it is preferable that the number N of wavenumber vectors $\{(k_{x,n}, k_{y,n})\}_n$ that can be set is larger. Further, in order to reduce anisotropy of resolution of the three-dimensional image of the observation object S, it is preferable that the wavenumber vectors $\{(k_{x,n}, k_{y,n})\}_n$ are uniformly distributed in the two-dimensional wavenumber space. From the above viewpoints, the case in which the wavenumber vectors $\{(k_{x,n}, k_{y,n})\}_n$ are distributed two-dimensionally ((a) to (c) in FIG. 7, (a) in FIG. 8) is preferable as compared with the case in which the wavenumber vectors $\{(k_{x,n}, k_{y,n})\}_n$ are distributed one-dimensionally ((b) in FIG. 8).

Next, the acquisition of the two-dimensional interference image by the imaging unit 41 in the imaging step will be described. When the observation object S is irradiated with the first split light $u_{in}(x, y)$ as represented by the above Formula (1), the first split light $u_{out}(x, y, t)$ arriving at the imaging plane of the imaging unit 41 is represented by the following Formula (7).

[Formula 7]

$$u_{out}(x, y, t) = o(x - Vt, y) \cdot u_{in}(x, y) \tag{7}$$

In the above Formula, o(x - Vt, y) represents the image of the observation object S at a position optically conjugate to the imaging plane of the imaging unit 41. V is a moving speed of the observation object S moving in the x direction. t is a time variable. The imaging unit 41 receives, on the imaging plane, the first split light $u_{out}(x, y, t)$ represented by the above Formula (7), and the second split light which is incident as a plane wave along a direction inclined with respect to an incident direction of the first split light, and repeatedly outputs the detection signal representing the two-dimensional interference image generated by interference between the first split light and the second split light described above.

Next, the contents of the processing performed by the processing unit 42 in the processing step will be described. The processing unit 42 inputs the detection signal repeatedly output from the imaging unit 41, and performs the processing as follows. Based on the detection signal at each time, the two-dimensional interference images at respective times (that is, time series data of the two-dimensional interference image) are generated. Further, by using a fringe analysis method, based on the two-dimensional interference image at each time t, the image of the observation object S by the first split light $u_{out}(x, y, t)$ arriving at the imaging plane of the imaging unit 41 at each time t, that is, the image of the observation object S at a position optically conjugate to the imaging plane, is generated.

In consideration of the fact that the observation object S is moving at the speed V in the x direction, in the xyz coordinate system which is set to be fixed to the measurement system, an x coordinate is converted into an x' coordinate which is set to be fixed to the observation object S. That is, coordinate conversion represented by the following Formula (8) is performed. The image by the first split light $u'_{out}(x', y, t)$ after performing the above coordinate conversion is represented as in the following Formula (9). In addition, by using the above Formula (1), Formula (9) is represented as in the following Formula (10).

Formula 8]

$$x - Vt = x' \tag{8}$$

[Formula 9]

$$u'_{out}\left(x',y,t\right)=u_{out}\left(x'+Vt,y,t\right)=o\left(x',y\right)\cdot u_{in}\left(x'+Vt,y\right) \qquad (9)$$

[Formula 10]

$$u'_{out}\left(x',y,t\right)=o\left(x',y\right)\cdot u_{in}\left(x'+Vt,y\right)$$
$$=o\left(x',y\right)\cdot\sum_{n=1}^{N}U_{in}\left(k_{x,n},k_{y,n}\right)\cdot\exp\left[i\left(k_{x,n}\left(x'+Vt\right)+k_{y,n}y\right)\right] \qquad (10)$$
$$=o\left(x',y\right)\cdot\sum_{n=1}^{N}U_{in}\left(k_{x,n},k_{y,n}\right)\cdot\exp\left[i\left(k_{x,n}x'+k_{y,n}y\right)\right]\cdot\exp\left(ik_{x,n}Vt\right)$$

The above Formula (10) is a sum of components which vary with time at frequencies $f_n$ represented by the following Formula (11) (frequencies according to the wavenumber components $k_{x,n}$ in the moving direction of the respective N light components). $u'_{out}(x', y, t)$ represented by the above Formula (10) is sampled respectively at discrete times $\{t_i\}_i$. Further, when a component which varies with time at the frequency $f_n$ is extracted from the above, as shown in the following Formula (12), in the x'yz coordinate system set to be fixed to the observation object S, the complex amplitude image when the stationary observation object S is irradiated with each light component (the wavenumber vector $(k_{x,n}, k_{y,n})$, the amplitude $U_{in}(k_{x,n}, k_{y,n})$), that is, the complex amplitude image for each of the N irradiation directions, is obtained.

[Formula 11]

$$f_n=\frac{k_{x,n}V}{2\pi} \qquad (11)$$

[Formula 12]

$$\sum_{i}u'_{out}\left(x',y,t_i\right)\cdot\exp\left(-i2\pi f_n t_i\right)$$
$$=o\left(x',y\right)\cdot U_{in}\left(k_{x,n},k_{y,n}\right)\cdot\exp\left[i\left(k_{x,n}x'+k_{y,n}y\right)\right] \qquad (12)$$

Further, based on the above N irradiation directions, the phase differential image of the observation object S can be generated. In addition, based on the phase differential image, the three-dimensional refractive index distribution image of the observation object S can be generated. In the generation of the above images, a method described in Non Patent Document 1 or Non Patent Document 2 can be used.

The method described in Non Patent Document 1 is a method using the Fourier slice theorem, and can be applied in the case in which scattering of the light in the observation object S can be ignored. The method described in Non Patent Document 2 is a method using the Fourier diffraction theorem, and generates the three-dimensional refractive index distribution image of the observation object S in consideration of scattering of the light in the observation object S.

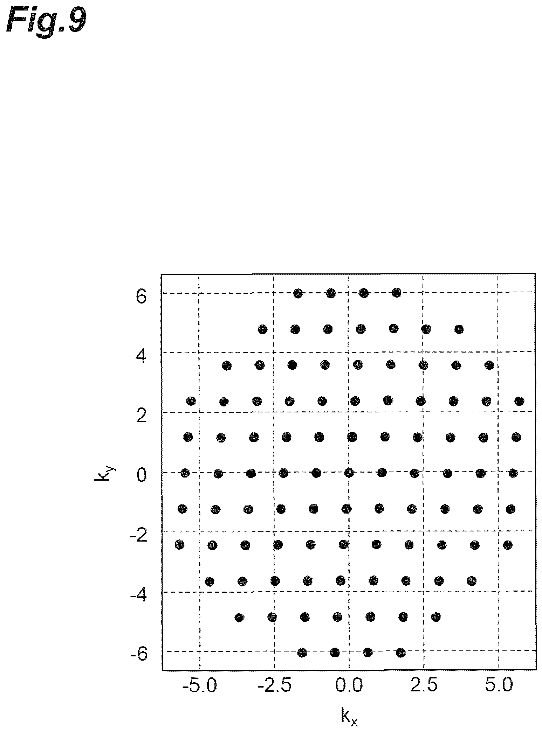

Next, simulation results will be described with reference to FIG. 9 to FIG. 15. A numerical aperture of each of the lenses 32 and 33 is set to 1.0. A wavelength of the light output from the light source 11 in vacuum is set to $\lambda_0$, and a moving speed V of the observation object S moving in the x direction is set to 1000 $\lambda_0$ / s. An imaging frame rate of the imaging unit 41 is set to 3000 fps. The number of images for the imaging of the two-dimensional interference image by the imaging unit 41 is set to 312.

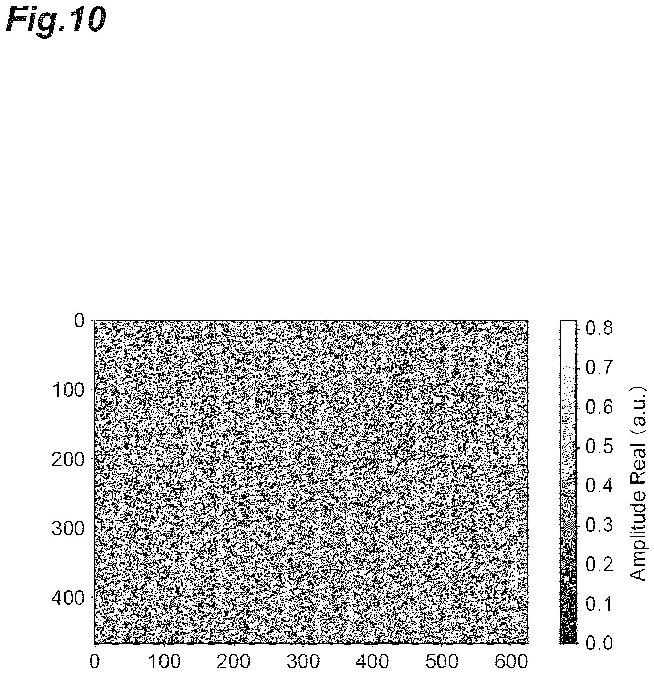

FIG. 9 is a diagram showing the distribution of the wavenumber vectors $\{(k_{x,n}, k_{y,n})\}_n$ used in the simulation. FIG. 10 is a diagram showing the modulation pattern m(x, y) generated based on the distribution of the wavenumber vectors $\{(k_{x,n}, k_{y,n})\}_n$ shown in FIG. 9. In FIG. 10, the magnitude of the amplitude modulation is indicated by grayscale.

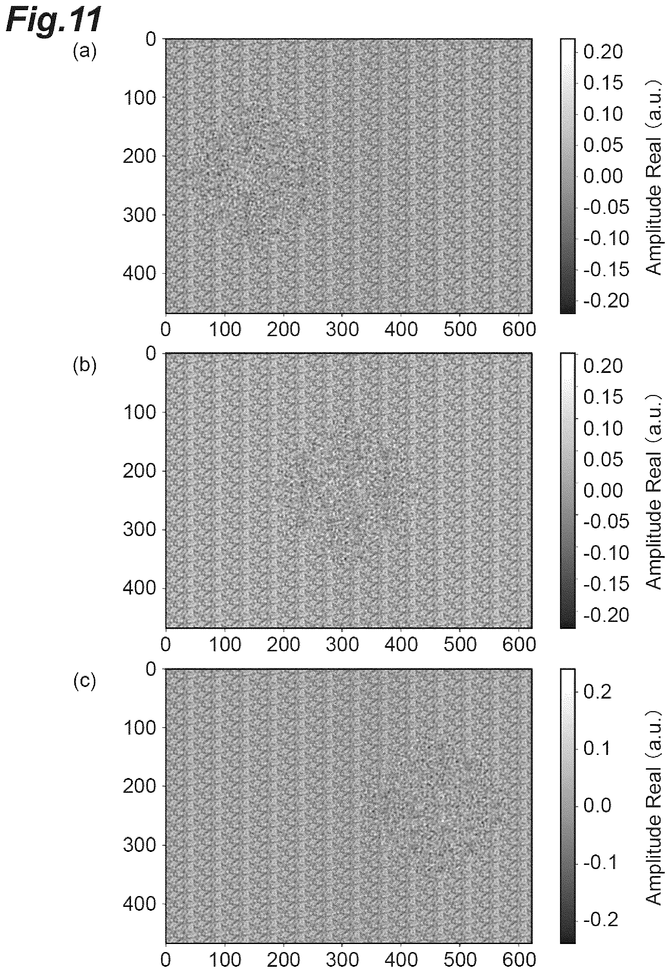

FIG. 11 to FIG. 15 include diagrams showing various images generated in the simulation.

FIG. 11 includes diagrams each showing the real part of the image of $u_{out}(x, y, t)$ at each time generated in the simulation. (a) shows the real part of the image of $u_{out}(x, y, t)$ at t = 0 ms. (b) shows the real part of the image of $u_{out}(x, y, t)$ at t = 50 ms. (c) shows the real part of the image of $u_{out}(x, y, t)$ at t = 100 ms.

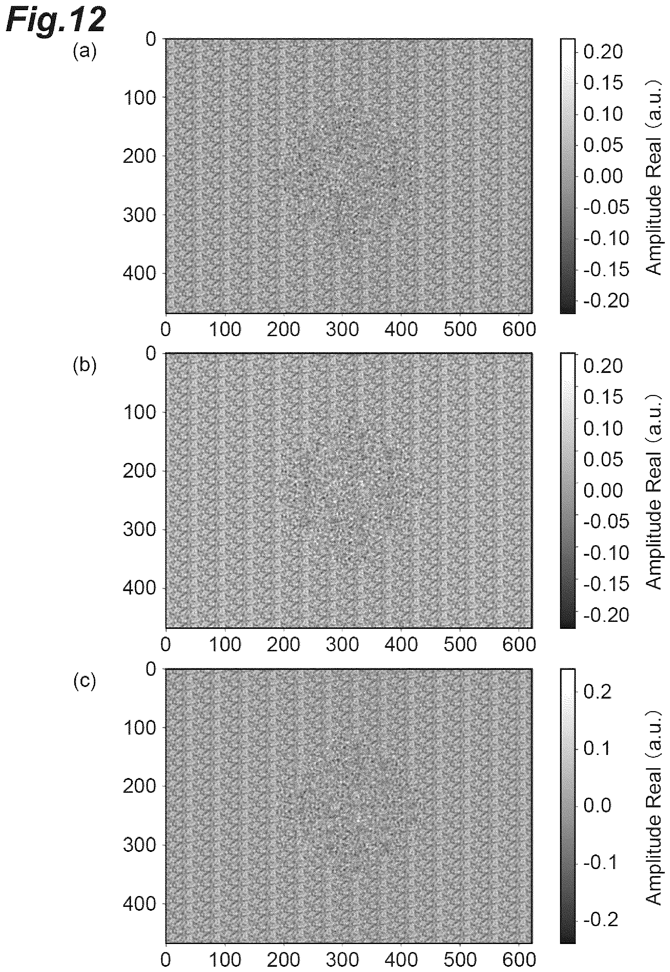

FIG. 12 includes diagrams each showing the real part of the image of $u'_{out}(x', y, t)$ after the coordinate conversion at each time generated in the simulation. (a) shows the real part of the image of u'$_{out}$(x', y, t) at t = 0 ms. (b) shows the real part of the image of u'$_{out}$(x', y, t) at t = 50 ms. (c) shows the real part of the image of u'$_{out}$(x', y, t) at t = 100 ms.

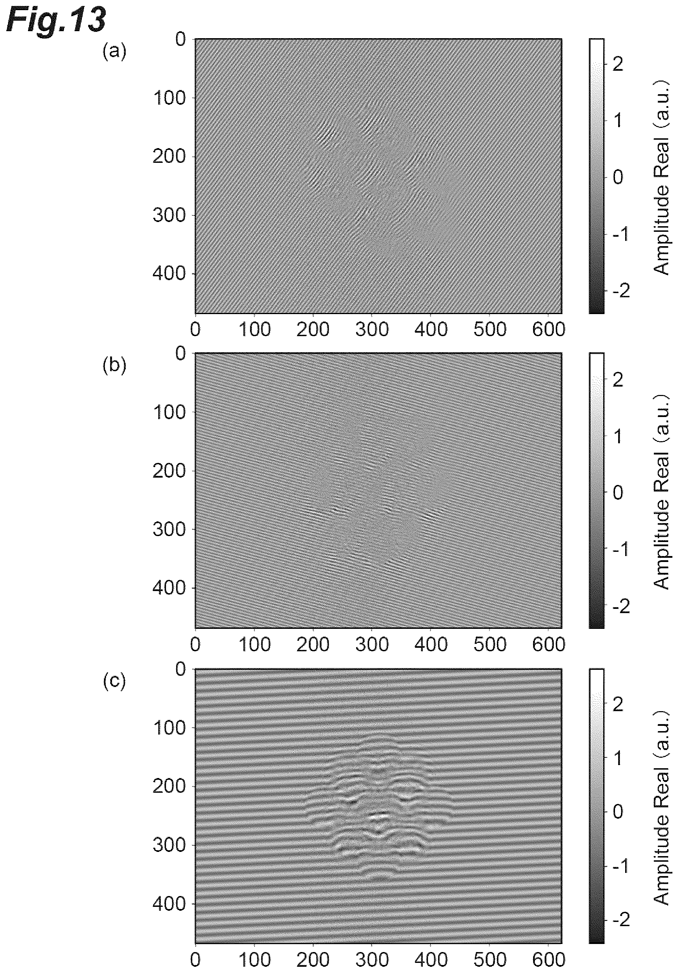

FIG. 13 includes diagrams each showing the complex amplitude image for each irradiation direction generated in the simulation. (a) shows the real part of the complex amplitude image when the observation object is irradiated with the light component ($f_n$ = -769.0 Hz) with the incident angle of ($\theta_x$, $\theta_y$) = (-35.2°, -25.6°). (b) shows the real part of the complex amplitude image when the observation object is irradiated with the light component ($f_n$ = -269.2 Hz) with the incident angle of ($\theta_x$, $\theta_y$) = (-11.6°, -46.2°). (c) shows the real part of the complex amplitude image when the observation object is irradiated with the light component ($f_n$ = 19.2 Hz) with the incident angle of ($\theta_x$, $\theta_y$) = (0.8°, -16.7°).

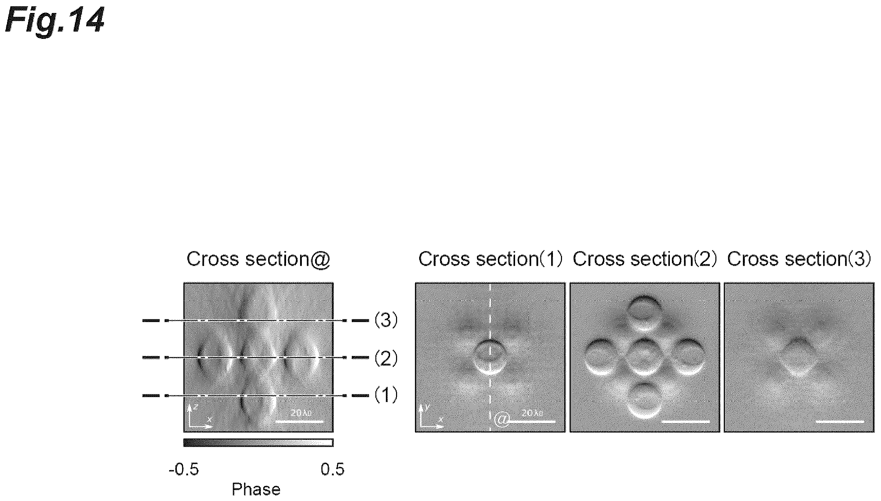

FIG. 14 is a diagram showing the phase differential images of the observation object generated in the simulation. A left side image shows the phase differential image in an xz cross section, and the other images show the phase differential images in xy cross sections respectively at three positions in the z direction.

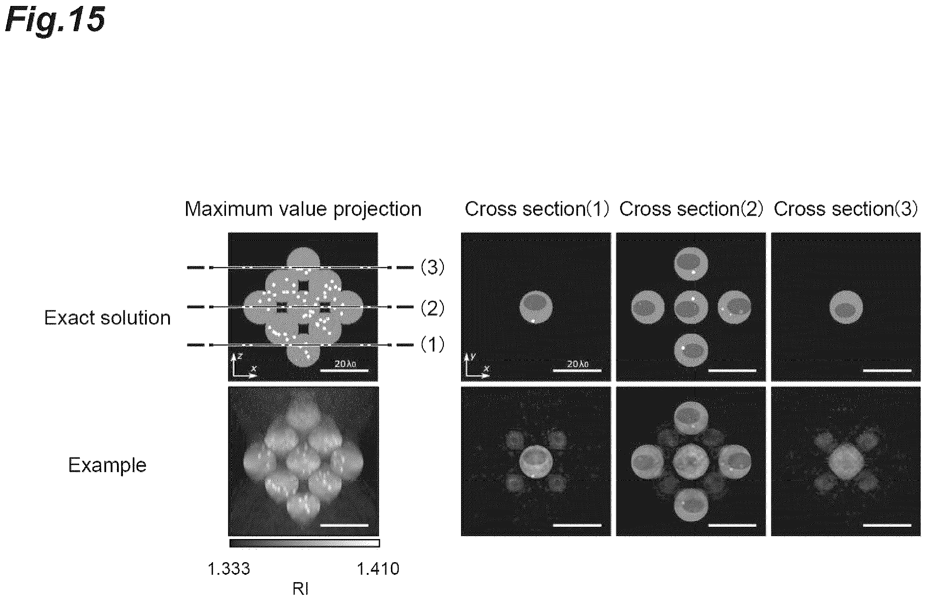

FIG. 15 is a diagram showing the refractive index distribution images of the observation object generated in the simulation. An upper row shows the refractive index distribution images of the exact solution, and a lower row shows the refractive index distribution images generated by the simulation. Further, left side images show maximum value projection images in the y direction, and the other images show the refractive index distribution images in xy cross sections respectively at three positions in the z direction.

As shown in the simulation results described above, according to the present embodiment, the moving observation object can be observed. Further, according to the present embodiment, as each of the lenses 31 to 34, a spherical lens can be used instead of a cylindrical lens. Each of the optical system between the modulation unit and the observation object and the optical system between the observation object and the imaging unit is not an optical system having a special configuration, and each of the optical systems can be set to a usual imaging optical system. Therefore, according to the present embodiment, the optical system can be easily adjusted, and the moving observation object can be easily observed.

In the processing performed by the processing unit 42 described above, it is assumed, in accordance with the Nyquist theorem, that the imaging frame rate of the imaging unit 41 is sufficiently high in order to extract the component which varies with time at the frequency $f_n$ (Formula (11)) from the above Formula (10). The Nyquist theorem states that, to accurately reconstruct a waveform of a signal, it is necessary to sample the signal at a rate at least twice the maximum frequency component of the signal.

That is, when a numerical aperture of the lens 32 which is the objective lens on the irradiation side is set to $NA_{in}$, a wavelength of the light is set to $\lambda_0$, and a wavenumber of the light is set to $k_0$, a maximum value $k_{x,max}$ of $k_{x,n}$ is represented by the following Formula (13), and a maximum value $f_{max}$ of the frequency $f_n$ is represented by the following Formula (14). According to the Nyquist theorem, the imaging frame rate $f_s$ of the imaging unit 41 needs to be at least $2f_{max}$ as represented by the following Formula (15).

[Formula 13]

$$k_{x,\max} = k_0 NA_{in} = \frac{2\pi NA_{in}}{\lambda_0} \tag{13}$$

[Formula 14]

$$f_{\max} = \frac{NA_{in} V}{\lambda_0} \tag{14}$$

[Formula 15]

$$f_s \geq 2 f_{\max} = \frac{2 NA_{in} V}{\lambda_0} \tag{15}$$

However, the above Formula (10) does not need to be reproduced precisely without distortion, and the imaging frame rate $f_s$ of the imaging unit 41 does not need to be at least $2f_{max}$. That is, it is sufficient that the complex amplitude image (a right side of the above Formula (12)) when the stationary observation object S is irradiated with each light component (the wavenumber vector ($k_{x,n}$, $k_{y,n}$), the amplitude $U_{in}(k_{x,n}, k_{y,n})$) in the x'yz coordinate system set to be fixed to the observation object S is obtained. In the case in which the imaging frame rate $f_s$ of the imaging unit 41 is less than $2f_{max}$ (in the case of the under sampling condition), aliasing is utilized as described below.

Aliasing is a phenomenon in which, when a continuous time signal is sampled at a sampling rate $f_s$ less than the Nyquist rate ($2f_{max}$), a discrete time Fourier transform of a discrete time signal obtained by the sampling is folded into a frequency range of $[-f_s/2, f_s/2]$. When the signal of the frequency $f_n$ is sampled at the sampling rate $f_s$, a frequency $f_{n,alias}$ observed by the aliasing is represented by the following Formula (16). mod $f_s$ is a modulo operation with a modulus $f_s$, and gives a remainder when divided by $f_s$. For example, when it is set to $f_n$ = 80 Hz and $f_s$ = 100 Hz, $f_{n,alias}$ = -20 Hz.
[Formula 16]

$$f_{n,alias} = \left[\left(f_n + \frac{f_s}{2}\right) \bmod f_s\right] - \frac{f_s}{2} \qquad (16)$$

The frequency observed by the aliasing becomes different from an actual frequency. However, in the case in which the observed frequency and the actual frequency are in a one-to-one correspondence, the complex amplitude image (the right side of the above Formula (12)) when the stationary observation object S in the x'yz coordinate system set to be fixed to the observation object S is irradiated with each light component (the wavenumber vector ($k_{x,n}$, $k_{y,n}$), the amplitude $U_{in}(k_{x,n}, k_{y,n})$) can be obtained. In order to make the observed frequency and the actual frequency be in the one-to-one correspondence, it is sufficient that the remainders which are obtained when the wavenumber components $k_{x,n}$ in the moving direction (the x direction) of the observation object S are divided by the frame rate $f_s$ of the imaging unit 41 are different from each other.

In the case in which the aliasing is used, by extracting a component which varies with time at the frequency $f_{n,alias}$ corresponding to the frequency $f_n$ by using the following Formula (17) instead of the above Formula (12), the complex amplitude image when the stationary observation object S is irradiated with each light component (the wavenumber vector ($k_{x,n}$, $k_{y,n}$), the amplitude $U_{in}(k_{x,n}, k_{y,n})$) in the x'yz coordinate system set to be fixed to the observation object S, that is, the complex amplitude image for each of the N irradiation directions, is obtained.
[Formula 17]

$$\sum_i u'_{out}\left(x', y, t_i\right) \cdot \exp\left(-i2\pi f_{n,alias} t_i\right)$$
$$= o\left(x', y\right) \cdot U_{in}\left(k_{x,n}, k_{y,n}\right) \cdot \exp\left[i\left(k_{x,n}x' + k_{y,n}y\right)\right] \qquad (17)$$

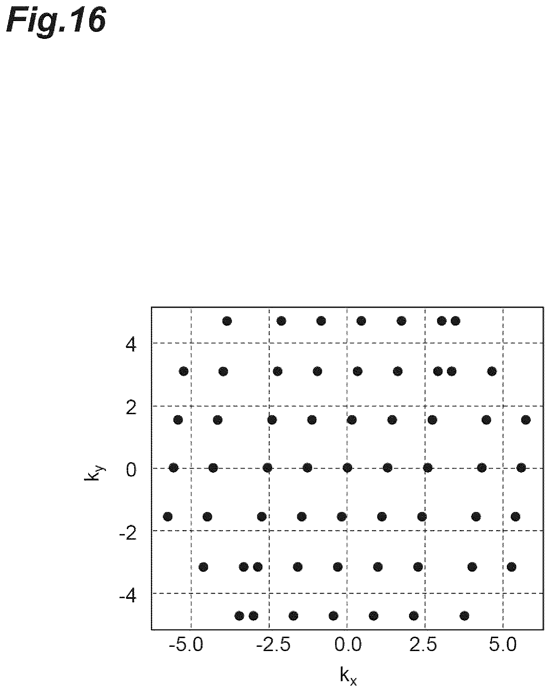

Next, simulation results in the case in which the aliasing is utilized will be described with reference to FIG. 16 to FIG. 24. A numerical aperture of each of the lenses 32 and 33 is set to 1.0. A wavelength of the light output from the light source 11 in vacuum is set to $\lambda_0$, and a moving speed V of the observation object S moving in the x direction is set to 1000 $\lambda_0$/s. An imaging frame rate of the imaging unit 41 is set to 1000 fps. The number of images for the imaging of the two-dimensional interference image by the imaging unit 41 is set to 117.

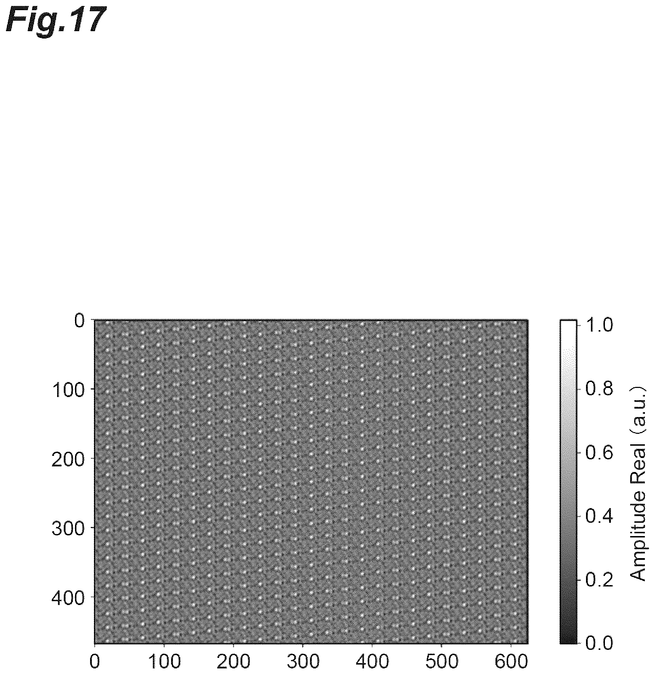

FIG. 16 is a diagram showing the distribution of the wavenumber vectors $\{(k_{x,n}, k_{y,n})\}_n$ used in the simulation. FIG. 17 is a diagram showing the modulation pattern m(x, y) generated based on the distribution of the wavenumber vectors $\{(k_{x,n}, k_{y,n})\}_n$ shown in FIG. 16. In FIG. 17, the magnitude of the amplitude modulation is indicated by grayscale.

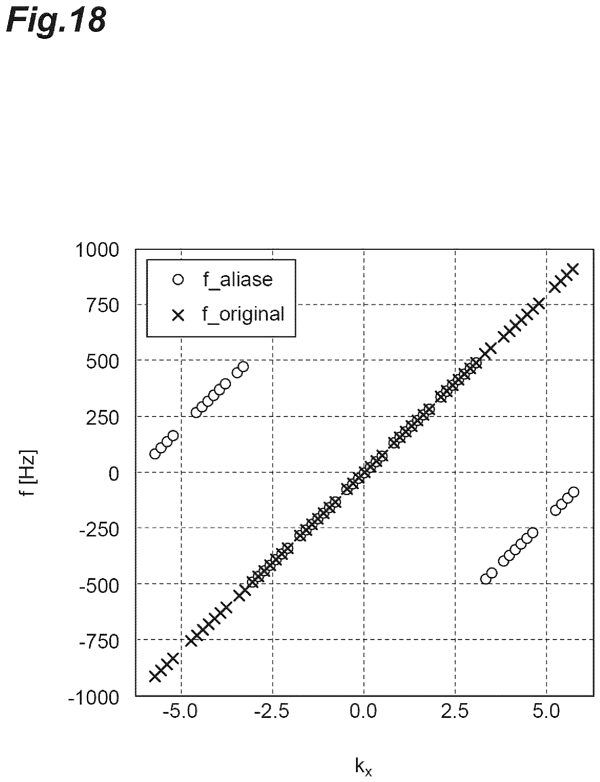

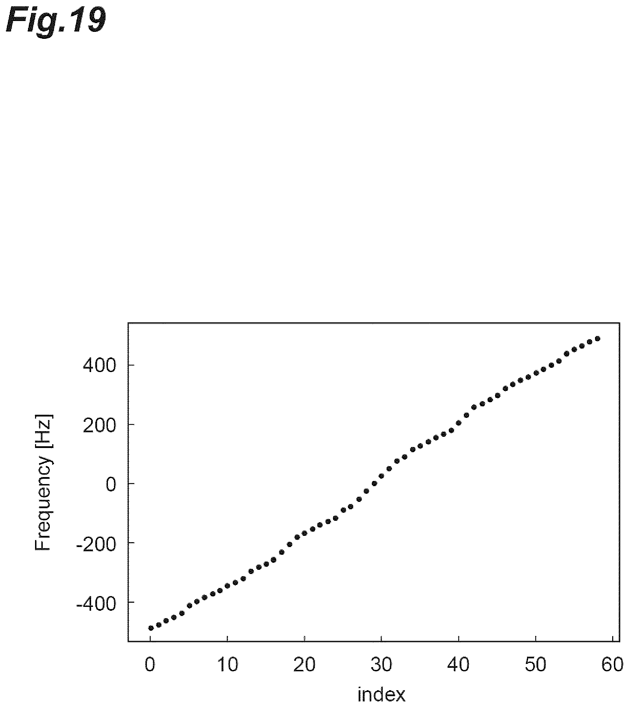

FIG. 18 is a diagram showing the correspondence relationship between the wavenumber component $k_{x,n}$ in the x direction and the frequency $f_n$ of each light component. In this diagram, the correspondence relationships respectively before and after the aliasing are shown. FIG. 19 is a diagram showing the frequencies $f_n$ after the aliasing arranged in order from smaller to larger values. As shown in these diagrams, the remainders obtained when the wavenumber components $k_{x,n}$ in the moving direction (the x direction) of the observation object S are divided by the frame rate $f_s$ of the imaging unit 41 are different from each other.

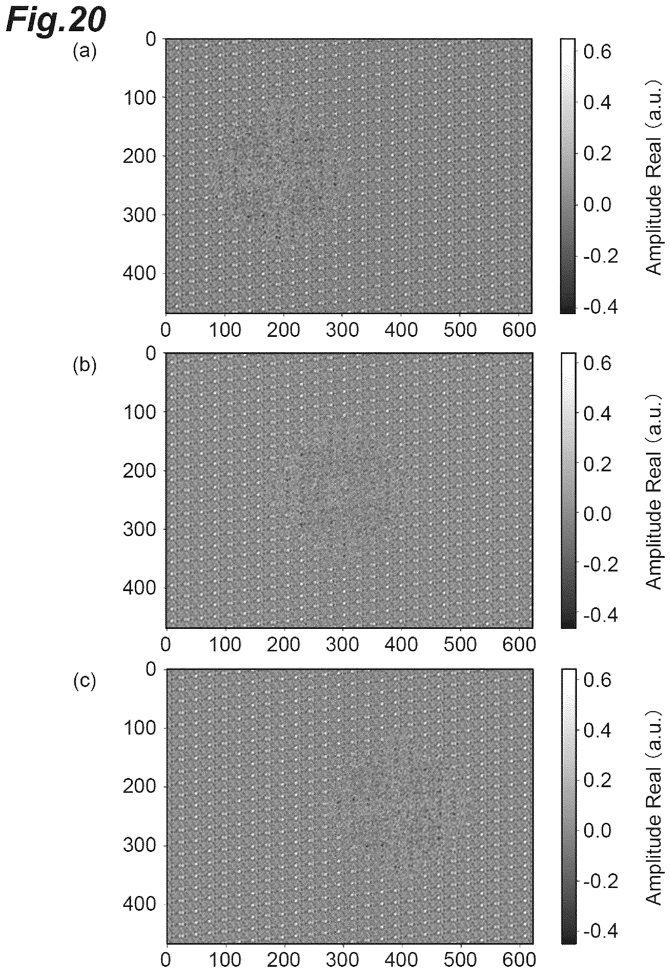

FIG. 20 to FIG. 24 include diagrams showing various images generated in the simulation in the case in which the aliasing is utilized.

FIG. 20 includes diagrams each showing the real part of the image of $u_{out}(x, y, t)$ at each time generated in the simulation. (a) shows the real part of the image of $u_{out}(x, y, t)$ at t = 0 ms. (b) shows the real part of the image of $u_{out}(x, y, t)$ at t = 50 ms. (c) shows the real part of the image of $u_{out}(x, y, t)$ at t = 100 ms.

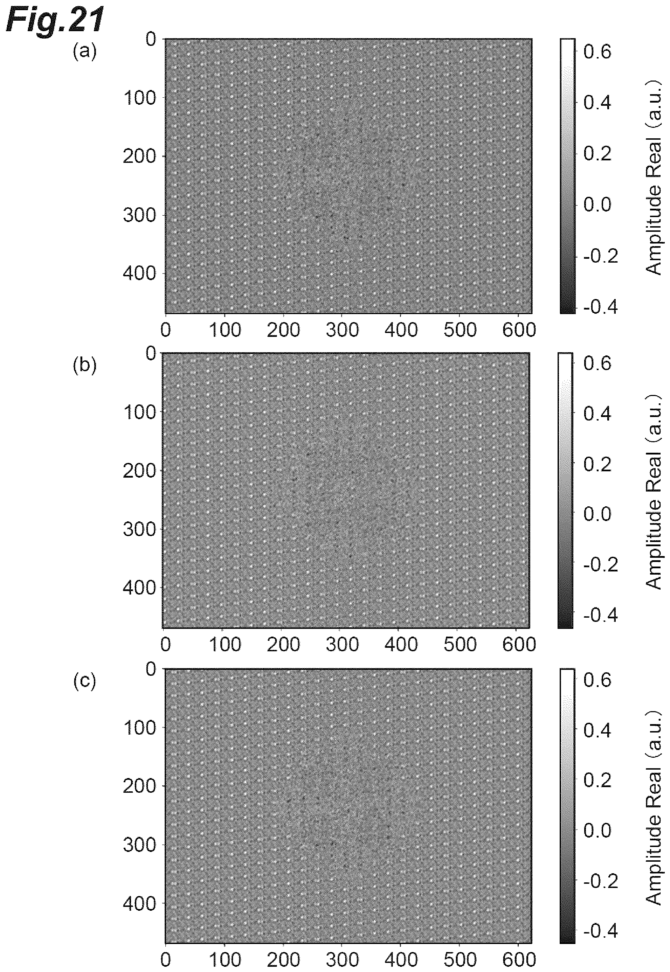

FIG. 21 includes diagrams each showing the real part of the image of $u'_{out}(x', y, t)$ after the coordinate conversion at each time generated in the simulation. (a) shows the real part of the image of $u'_{out}(x', y, t)$ at t = 0 ms. (b) shows the real part of the image of $u'_{out}(x', y, t)$ at t = 50 ms. (c) shows the real part of the image of $u'_{out}(x', y, t)$ at t = 100 ms.

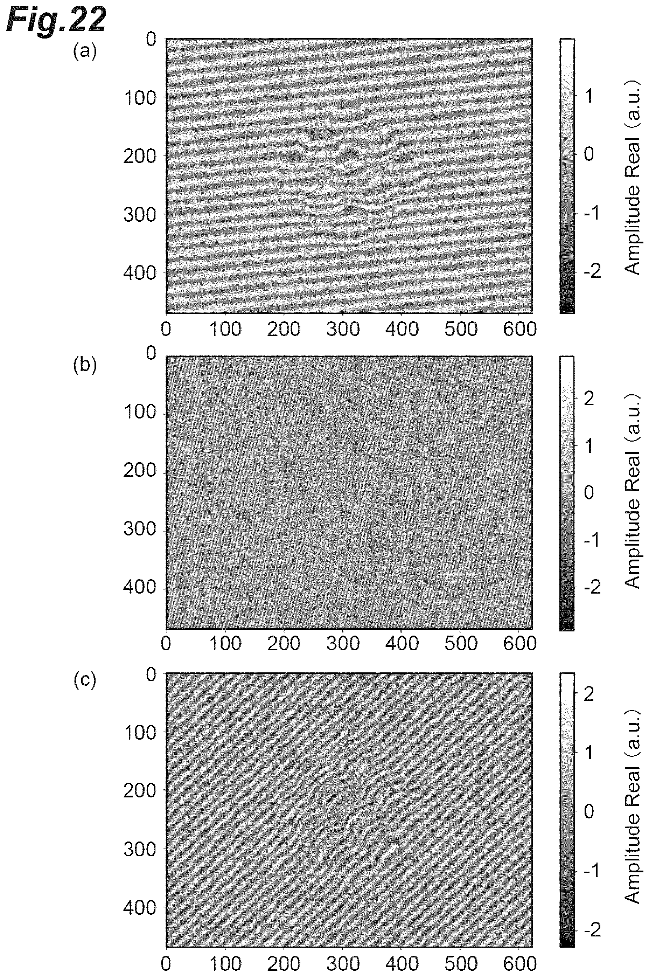

FIG. 22 includes diagrams each showing the complex amplitude image for each irradiation direction generated in the simulation. (a) shows the real part of the complex amplitude image when the observation object is irradiated with the

light component ($f_n$ = -25.6 Hz) with the incident angle of ($\theta_x$, $\theta_y$) = (-1.1°, 10.8°). (b) shows the real part of the complex amplitude image when the observation object is irradiated with the light component ($f_n$ = 910.2 Hz, the frequency after the aliasing = -89.7 Hz) with the incident angle of ($\theta_x$, $\theta_y$) = (43.0°, -10.8°). (c) shows the real part of the complex amplitude image when the observation object is irradiated with the light component ($f_n$ = 230.7 Hz) with the incident angle of ($\theta_x$, $\theta_y$) = (24.9°, -10.8°).

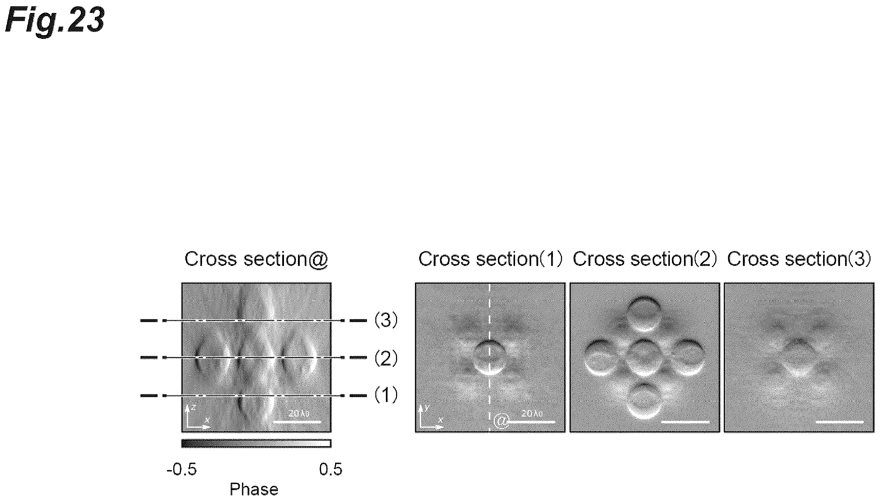

FIG. 23 is a diagram showing the phase differential images of the observation object generated in the simulation. A left side image shows the phase differential image in an xz cross section, and the other images show the phase differential images in xy cross sections respectively at three positions in the z direction.

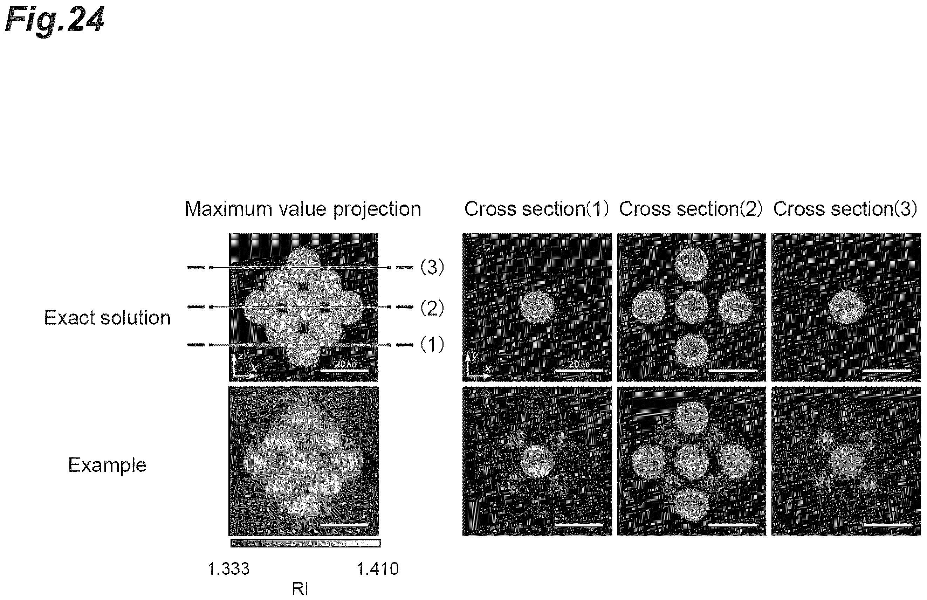

FIG. 24 is a diagram showing the refractive index distribution images of the observation object generated in the simulation. An upper row shows the refractive index distribution images of the exact solution, and a lower row shows the refractive index distribution images generated by the simulation. Further, left side images show maximum value projection images in the y direction, and the other images show the refractive index distribution images in xy cross sections respectively at three positions in the z direction.

As shown in the simulation results described above, even when the aliasing is utilized, the moving observation object can be observed. Further, by utilizing the aliasing, even in the case in which the moving speed V of the observation object S is high, or in the case in which the imaging frame rate of the imaging unit 41 is low, the moving observation object can be observed.

The observation apparatus and the observation method are not limited to the embodiments and configuration examples described above, and various modifications are possible.

The observation apparatus of a first aspect according to the above embodiment is an apparatus for observing a moving observation object, and includes (1) a light source for outputting light; (2) a splitting unit for splitting the light into first split light and second split light; (3) a modulation unit for spatially amplitude modulating the first split light based on a modulation pattern, and causing the first split light to include a plurality of light components having wavenumber components in a moving direction of the observation object different from each other; (4) an irradiation unit for irradiating the observation object at a position optically conjugate to the modulation unit with the first split light after being amplitude modulated by the modulation unit; (5) a combining unit for combining the first split light passed through the observation object and the second split light, and outputting combined light; (6) an imaging unit having an imaging plane arranged at a position optically conjugate to the observation object, and for receiving the combined light on the imaging plane, and repeatedly outputting a detection signal representing a two-dimensional interference image; and (7) a processing unit for generating a complex amplitude image when the observation object is irradiated with each of the plurality of light components based on the detection signal repeatedly output from the imaging unit, and (8) the processing unit, based on time series data of the two-dimensional interference image generated from the detection signal repeatedly output from the imaging unit, generates an image of the observation object at each time by the first split light arriving at the imaging plane, generates an image of the observation object at each time in a coordinate system fixed to the observation object, extracts a component which varies with time at a frequency according to the wavenumber component in the moving direction of each of the plurality of light components, and generates the complex amplitude image when the observation object is irradiated with each of the plurality of light components.

In the observation apparatus of a second aspect, in the configuration of the first aspect, the modulation unit may cause the first split light to include the plurality of light components having wavenumbers distributed two-dimensionally in a wavenumber space.

In the observation apparatus of a third aspect, in the configuration of the first or second aspect, the modulation unit may cause the first split light to include the plurality of light components with remainders obtained when the wavenumber components in the moving direction are divided by a frame rate of the imaging unit different from each other.

In the observation apparatus of a fourth aspect, in the configuration of any one of the first to third aspects, the modulation unit may spatially amplitude modulate the first split light based on the modulation pattern in which values at two positions which are origin symmetric in a pattern of a Fourier transform of the modulation pattern are in a complex conjugate relationship.

In the observation apparatus of a fifth aspect, in the configuration of any one of the first to fourth aspects, the modulation unit may include a spatial light modulator in which the modulation pattern is a fixed pattern.

In the observation apparatus of a sixth aspect, in the configuration of any one of the first to fourth aspects, the modulation unit may include a spatial light modulator in which the modulation pattern is a pattern which can be variably set.

In the observation apparatus of a seventh aspect, in the configuration of any one of the first to sixth aspects, the processing unit may generate a phase differential image of the observation object based on the complex amplitude image when the observation object is irradiated with each of the plurality of light components.

In the observation apparatus of an eighth aspect, in the configuration of the seventh aspect, the processing unit may generate a refractive index distribution image of the observation object based on the phase differential image.

The observation method of a first aspect according to the above embodiment is a method for observing a moving observation object, and includes (1) a splitting step of splitting light output from a light source into first split light and second split light; (2) a modulation step of using a modulation unit for spatially amplitude modulating the first split light based on a modulation pattern, and causing the first split light to include a plurality of light components having wavenumber components in a moving direction of the observation object different from each other; (3) an irradiation step of irradiating the observation object at a position optically conjugate to the modulation unit with the first split light after being amplitude modulated by the modulation unit; (4) a combining step of combining the first split light passed through the observation object and the second split light, and outputting combined light; (5) an imaging step of using an imaging unit having an imaging plane arranged at a position optically conjugate to the observation object, receiving the combined light on the imaging plane, and repeatedly outputting a detection signal representing a two-dimensional interference image; and (6) a processing step of generating a complex amplitude image when the observation object is irradiated with each of the plurality of light components based on the detection signal repeatedly output from the imaging unit, and (7) in the processing step, based on time series data of the two-dimensional interference image generated from the detection signal repeatedly output from the imaging unit, an image of the observation object at each time by the first split light arriving at the imaging plane is generated, an image of the observation object at each time in a coordinate system fixed to the observation object is generated, a component which varies with time at a frequency according to the wavenumber component in the moving direction of each of the plurality of light components is extracted, and the complex amplitude image when the observation object is irradiated with each of the plurality of light components is generated.

In the observation method of a second aspect, in the configuration of the first aspect, in the modulation step, the first split light may be caused to include the plurality of light components having wavenumbers distributed two-dimensionally in a wavenumber space.

In the observation method of a third aspect, in the configuration of the first or second aspect, in the modulation step, the first split light may be caused to include the plurality of light components with remainders obtained when the wavenumber components in the moving direction are divided by a frame rate of the imaging unit different from each other.

In the observation method of a fourth aspect, in the configuration of any one of the first to third aspects, in the modulation step, the first split light may be spatially amplitude modulated based on the modulation pattern in which values at two positions which are origin symmetric in a pattern of a Fourier transform of the modulation pattern are in a complex conjugate relationship.

In the observation method of a fifth aspect, in the configuration of any one of the first to fourth aspects, in the modulation step, the first split light may be spatially amplitude modulated by using the modulation unit including a spatial light modulator in which the modulation pattern is a fixed pattern.

In the observation method of a sixth aspect, in the configuration of any one of the first to fourth aspects, in the modulation step, the first split light may be spatially amplitude modulated by using the modulation unit including a spatial light modulator in which the modulation pattern is a pattern which can be variably set.

In the observation method of a seventh aspect, in the configuration of any one of the first to sixth aspects, in the processing step, a phase differential image of the observation object may be generated based on the complex amplitude image when the observation object is irradiated with each of the plurality of light components.

In the observation method of an eighth aspect, in the configuration of the seventh aspect, in the processing step, a refractive index distribution image of the observation object may be generated based on the phase differential image.

## Industrial Applicability

The embodiments can be used as an apparatus and a method capable of easily observing a moving observation object.

## Reference Signs List

1A - 1C - observation apparatus, 11 - light source, 12 - beam splitter (splitting unit), 13, 14 - mirror, 15 - beam splitter (combining unit), 16 - beam splitter, 21, 22 - modulation unit, 23 - spatial light modulator, 24 - polarizer, 31 - 34 - lens, 41 - imaging unit, 42 - processing unit.

## Claims

1.    An observation apparatus for observing a moving observation object, the apparatus comprising:

   a light source for outputting light;
   a splitting unit for splitting the light into first split light and second split light;
   a modulation unit for spatially amplitude modulating the first split light based on a modulation pattern, and causing the first split light to include a plurality of light components having wavenumber components in a moving direction of the observation object different from each other;

an irradiation unit for irradiating the observation object at a position optically conjugate to the modulation unit with the first split light after being amplitude modulated by the modulation unit;

a combining unit for combining the first split light passed through the observation object and the second split light, and outputting combined light;

an imaging unit having an imaging plane arranged at a position optically conjugate to the observation object, and for receiving the combined light on the imaging plane, and repeatedly outputting a detection signal representing a two-dimensional interference image; and

a processing unit for generating a complex amplitude image when the observation object is irradiated with each of the plurality of light components based on the detection signal repeatedly output from the imaging unit, wherein the processing unit, based on time series data of the two-dimensional interference image generated from the detection signal repeatedly output from the imaging unit, generates an image of the observation object at each time by the first split light arriving at the imaging plane, generates an image of the observation object at each time in a coordinate system fixed to the observation object, extracts a component which varies with time at a frequency according to the wavenumber component in the moving direction of each of the plurality of light components, and generates the complex amplitude image when the observation object is irradiated with each of the plurality of light components.

2. The observation apparatus according to Claim 1, wherein the modulation unit causes the first split light to include the plurality of light components having wavenumbers distributed two-dimensionally in a wavenumber space.

3. The observation apparatus according to Claim 1 or 2, wherein the modulation unit causes the first split light to include the plurality of light components with remainders obtained when the wavenumber components in the moving direction are divided by a frame rate of the imaging unit different from each other.

4. The observation apparatus according to any one of Claims 1 to 3, wherein the modulation unit spatially amplitude modulates the first split light based on the modulation pattern in which values at two positions which are origin symmetric in a pattern of a Fourier transform of the modulation pattern are in a complex conjugate relationship.

5. The observation apparatus according to any one of Claims 1 to 4, wherein the modulation unit includes a spatial light modulator in which the modulation pattern is a fixed pattern.

6. The observation apparatus according to any one of Claims 1 to 4, wherein the modulation unit includes a spatial light modulator in which the modulation pattern is a pattern which can be variably set.

7. The observation apparatus according to any one of Claims 1 to 6, wherein the processing unit generates a phase differential image of the observation object based on the complex amplitude image when the observation object is irradiated with each of the plurality of light components.

8. The observation apparatus according to Claim 7, wherein the processing unit generates a refractive index distribution image of the observation object based on the phase differential image.

9. An observation method for observing a moving observation object, the method comprising:

a splitting step of splitting light output from a light source into first split light and second split light;

a modulation step of using a modulation unit for spatially amplitude modulating the first split light based on a modulation pattern, and causing the first split light to include a plurality of light components having wavenumber components in a moving direction of the observation object different from each other;

an irradiation step of irradiating the observation object at a position optically conjugate to the modulation unit with the first split light after being amplitude modulated by the modulation unit;

a combining step of combining the first split light passed through the observation object and the second split light, and outputting combined light;

an imaging step of using an imaging unit having an imaging plane arranged at a position optically conjugate to the observation object, receiving the combined light on the imaging plane, and repeatedly outputting a detection signal representing a two-dimensional interference image; and

a processing step of generating a complex amplitude image when the observation object is irradiated with each of the plurality of light components based on the detection signal repeatedly output from the imaging unit, wherein in the processing step, based on time series data of the two-dimensional interference image generated from the detection signal repeatedly output from the imaging unit, an image of the observation object at each time by the first split light arriving at the imaging plane is generated, an image of the observation object at each time in a coordinate system fixed to the observation object is generated, a component which varies with time at a frequency according to the wavenumber component in the moving direction of each of the plurality of light components is extracted, and the complex amplitude image when the observation object is irradiated with each of the plurality of light components is generated.

10. The observation method according to Claim 9, wherein in the modulation step, the first split light is caused to include the plurality of light components having wavenumbers distributed two-dimensionally in a wavenumber space.

11. The observation method according to Claim 9 or 10, wherein in the modulation step, the first split light is caused to include the plurality of light components with remainders obtained when the wavenumber components in the moving direction are divided by a frame rate of the imaging unit different from each other.

12. The observation method according to any one of Claims 9 to 11, wherein in the modulation step, the first split light is spatially amplitude modulated based on the modulation pattern in which values at two positions which are origin symmetric in a pattern of a Fourier transform of the modulation pattern are in a complex conjugate relationship.

13. The observation method according to any one of Claims 9 to 12, wherein in the modulation step, the first split light is spatially amplitude modulated by using the modulation unit including a spatial light modulator in which the modulation pattern is a fixed pattern.

14. The observation method according to any one of Claims 9 to 12, wherein in the modulation step, the first split light is spatially amplitude modulated by using the modulation unit including a spatial light modulator in which the modulation pattern is a pattern which can be variably set.

15. The observation method according to any one of Claims 9 to 14, wherein in the processing step, a phase differential image of the observation object is generated based on the complex amplitude image when the observation object is irradiated with each of the plurality of light components.

16. The observation method according to Claim 15, wherein in the processing step, a refractive index distribution image of the observation object is generated based on the phase differential image.

*Fig.1*

PROCESSING UNIT ~42

*Fig.2*  1B

*Fig.3*  1C

PROCESSING UNIT — 42

# Fig.4

# Fig.5

(a)

(b)

# Fig.6

(a)

(b)

*Fig.7*

(a)

(b)

(c)

# Fig.8

(a)

(b)

Fig.9

# Fig.10

**Fig.11**

(a)

(b)

(c)

**Fig.12**

(a)

(b)

(c)

**Fig.13**

(a)

(b)

(c)

EP 4 715 367 A1

# Fig.14

Cross section@    Cross section(1)  Cross section(2)  Cross section(3)

--- (3)

--- (2)

--- (1)

20 λ0

-0.5                0.5

Phase

# Fig.15

Maximum value projection    Cross section(1)  Cross section(2)  Cross section(3)

Exact solution

Example

1.333                    1.410
RI

*Fig.16*

## Fig.17

*Fig.18*

# Fig.19

**Fig.20**

(a)

(b)

(c)

**Fig.21**

(a)

(b)

(c)

# Fig.22

(a)

(b)

(c)

## Fig.23

Cross section@

Cross section(1)  Cross section(2)  Cross section(3)

-0.5          0.5

Phase

Fig.24

# EP 4 715 367 A1

<table>
<tr><td colspan="2">INTERNATIONAL SEARCH REPORT</td><td>International application No.</td></tr>
<tr><td colspan="2"></td><td>**PCT/JP2024/014316**</td></tr>
</table>

| A. | CLASSIFICATION OF SUBJECT MATTER |
|---|---|

*G01N 21/17*(2006.01)i; *G01N 21/45*(2006.01)i
FI:   G01N21/17 630; G01N21/45 Z

According to International Patent Classification (IPC) or to both national classification and IPC

| B. | FIELDS SEARCHED |
|---|---|

Minimum documentation searched (classification system followed by classification symbols)

G01N 21/00-G01N 21/01; G01N 21/17-G01N 21/74; G01N 33/48-G01N 33/98

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2023-079446 A (HAMAMATSU PHOTONICS KK) 08 June 2023 (2023-06-08)<br>entire text, all drawings | 1-16 |
| A | US 2013/0271757 A1 (ZHANG, K.) 17 October 2013 (2013-10-17)<br>entire text, all drawings | 1-16 |
| A | US 2014/0300902 A1 (BIOPTIGEN INC.) 09 October 2014 (2014-10-09)<br>entire text, all drawings | 1-16 |

☐ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 May 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/014316**

| Patent document cited in search report | | | Publication date (day/month/year) | Patent family member(s) | | | Publication date (day/month/year) |
|---|---|---|---|---|---|---|---|
| JP | 2023-079446 | A | 08 June 2023 | WO | 2023/095442 | A1 | |
| | | | | entire text, all drawings | | | |
| US | 2013/0271757 | A1 | 17 October 2013 | WO | 2012/088320 | A2 | |
| | | | | entire text, all drawings | | | |
| US | 2014/0300902 | A1 | 09 October 2014 | WO | 2011/050249 | A1 | |
| | | | | entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. CHOI** ; **C. FANG-YEN** ; **K. BADIZADEGAN** ; **S. OH** ; **N. LUE** ; **R. R. DASARI** ; **M. S. FELD**. Tomographic phase microscopy. *Nature Methods*, 2007, vol. 4 (9), 717-719

- **Y. SUNG** ; **W. CHOI** ; **C. FANG-YEN** ; **K. BADIZA-DEGAN** ; **R. R. DASARI** ; **M. S. FELD**. Optical diffraction tomography for high resolution live cell imaging. *Optics Express*, 2009, vol. 17 (1), 266-277